# EUROPÄISCHE PATENTSCHRIFT

(11) **EP 2 933 029 B1**
(45) Veröffentlichungstag und Bekanntmachung des Hinweises auf die Patenterteilung: **08.02.2017**
(21) Anmeldenummer: 15159919.8
(22) Anmeldetag: 19.03.2015
(51) Int. Cl.: B09B 1/00, B09C 1/00, E21B 43/12, E21B 43/32

(54) **VERFAHREN ZUM ABDICHTEN VON EINZELNEN BEREICHEN EINES IN EINER DEPONIE ANGEORDNETEN GASBRUNNENS**
METHOD TO SEAL PARTICULAR ZONES OF A GAS WELL OF A LANDFILL.
PROCÉDÉ POUR RENDRE ÉTANCHE DES ZONES PARTICULIÈRES D'UN PUITS D'ASPIRATION DANS UNE DÉCHARGE.

(30) Priorität: 17.04.2014 DE 102014005736
(43) Veröffentlichungstag der Anmeldung: 21.10.2015
(73) Patentinhaber: Kanitz, Jürgen, 44805 Bochum (DE); Otto, Frank, 45897 Gelsenkirchen (DE)
(72) Erfinder: Kanitz, Jürgen, 44805 Bochum (DE); Otto, Frank, 45897 Gelsenkirchen (DE)
(74) Vertreter: Patentanwälte Vomberg & Schart

(56) Entgegenhaltungen:
- EP-A1- 0 747 142
- EP-A2- 1 920 854
- WO-A1-2005/110631
- WO-A2-03/004182
- DE-A1- 3 733 365
- DE-A1- 10 334 345
- US-A- 4 837 153
- US-A- 5 293 941
- US-A1- 2004 055 760

## Beschreibung

Die Erfindung betrifft ein Verfahren zum Abdichten von einzelnen Bereichen eines in einer Deponie angeordneten Gasbrunnens, die in einer Bohrung ein durchmesserkleineres Filterrohr aufweisen, wobei zwischen dem Filterrohr und dem Bohrungsmantel eine Schüttung aus permeablem Material, z. B. Filterkies angeordnet ist, die unterhalb der Geländeoberkante zumindest im Wesentlichen gasdicht und in einem darunter liegendem Bereich gasdurchlässig ist. Ein solches Verfahren wird beispielsweise in der WO2005/110631 A1 beschrieben.

In früheren Jahren sind anfallender Hausmüll oder hausmüllähnliche Gewerbeabfälle zu Müllhalden aufgeschichtet oder in vorhandene oder geschaffene Gruben abgekippt worden. Solche Gemische besitzen neben nicht zersetzbaren anorganischen Bestandteilen organische Bestandteile, die sich bei Anwesenheit von Sauerstoff und einer hinreichenden Feuchtigkeit aerob und bei Abwesenheit von Sauerstoff anaerob zersetzen.

Nach Erschöpfung der Deponiekapazität und dem Schließen dieser Deponien sind die gebildeten Haufwerke mehr oder weniger abgedeckt und in Einzelfällen begrünt worden. Um zu verhindern, dass die sich in dem aufgeschichteten Haufwerk einstellende anaerobe Zersetzung der organischen Bestandteile zu einer unkontrollierten Methangasbildung führt, sind in Deponien sogenannte Gasbrunnen eingezogen worden, die entweder gebohrt oder mittels eines Kaminziehrohres erstellt wurden. Solche Brunnen weisen zumeist einen Durchmesser von vorwiegend 600 mm bis 800 mm auf und sind, abgesehen von einer obersten Abdichtung, über den gesamten Tiefenbereich verfiltert. Die obere Abdichtung besteht aus bündigem Material, zum Beispiel Ton, der sich bis zu drei oder vier Meter tief erstreckt. Der darunter liegende Bereich ist mit einer gaspermeablen Schüttung versehen, die sich (ebenso wie die genannte Abdichtung) um ein Filterrohr erstreckt, über das Gas abgesaugt werden kann. Wird an dem Brunnen ein Unterdruck angelegt, so strömt das Gas aus porösen Bereichen in Richtung des Filterrohres. Die aus dem Haufwerk abgezogene Gasmenge ist direkt proportional zu der Permeabilität der jeweils abgesaugten Bereiche. Daher nimmt mit größerer Tiefe und hiermit regelmäßig verbundener geringerer Permeabilität der Gasfluss kontinuierlich ab. Im Extremfall kann der Gasfluss völlig zum Erliegen kommen. Zur Förderung der anaeroben Umsetzung muss in dem Gasbrunnen ein Unterdruck erzeugt werden, um Deponiegas abzuziehen. Die anaerobe Umsetzung der organischen Abfallstoffe ist zwar ein gasbildender Prozess, jedoch entsteht hierbei in beträchtlichen Mengen Wasserstoffgas, Methan und Kohlendioxid, deren wachsende Partialdrücke die weitere anaerobe Umsetzung hemmen. Aus diesem Grund muss das gebildete Gasgemisch stetig abgezogen werden, um die Umsetzung des biogenen Materials aufrechtzuerhalten. Die Reichweite, das heißt der Saugradius eines Gasbrunnens ist aus vorstehenden Gründen im oberen Bereich der Brunnen, das heißt in geringeren Tiefen relativ groß und wird zu größeren Tiefen stets geringer. Als geometrische Form ergibt sich somit ein Trichter als Absaugbereich. Dies führt dazu, dass in den meisten Fällen im oberen Bereich Undichtigkeiten zur Oberfläche entstehen und bereits große Mengen an Fremdluft angesaugt werden, so dass das Haufwerk der Deponien im oberen Bereich massiv übersorgt wird.

In der WO 03/004182 A2 wird dargelegt, dass eine stärkere Saugung über Gasbrunnen nur zu einer oberflächennahen Belüftung und etwaigen aeroben Umsetzung der biogenen Organik in den oberen Schichten führt. In tieferen Schichten erfolgt hingegen kaum eine oder keine Änderung der Umsetzungsbedingungen, so dass durch den biologischen Abbau in Folge eines Hydrolyseprozesses organischer Verbindungen in eine wassergelöste Form übergehen und über das Sickerwasser abtransportiert werden. Dies kann zu einer möglichen Grundwasserbelastung (gemessen als CSB- und NH₄ -Gehalt im Sickerwasser) führen. Zur Minimierung des ansonsten zu tätigenden Aufwandes und zur Beschleunigung des Abbaus der biogenen Organik wird in der WO 03/004182 A2 vorgeschlagen, im Bereich des Deponiegrundes eine größere Gasmenge abzusaugen als die in dem Bereich durch Zersetzung entstehende Gasmenge, so dass über die Außenluft Sauerstoff in das Haufwerk eindringt und der Zersetzungsprozess in eine zumindest weitgehend aerobe Zersetzung überführt wird. Eine erste Möglichkeit zur Verhinderung der "Übersaugung" der geländeoberflächennahen Schichten besteht darin, dass je nach Höhe des aufgeschichteten Haufwerks pro Saugleitung über beabstandet angeordnete, vorzugsweise ringförmige Saugöffnungen Deponiegas mit einem angelegten Unterdruck zwischen 2 x 10³ Pa und 3 x 10⁴ Pa abgesaugt und/oder die über die Saugleitung geförderte Flussrate des Deponiegases auf maximal 250 m³/h beschränkt wird. Diese Maßnahme dient dazu, dass der Methangehalt des Deponiegases deutlich höher ist und insgesamt größere Deponiegasmengen und damit deutlich höhere Energiegehalte gewonnen werden können.

Hierzu wird eine Vorrichtung verwendet, bei der eine in das Haufwerk eingebrachte Bohrung mit einem Durchmesser von mindestens 200 mm eine Saugleitung mit deutlich geringerem Durchmesser aufweist. Der verbleibende Ringraum zwischen dem Saugleitungsaußenmantel und dem Bohrungsmantel ist in abwechselnder Folge mit einem als Filterstrecke dienenden Kiesbett und einem zumindest weitgehend gasimpermeablem Material, vorzugsweise bindigem Material wie Quellton ausgefüllt, wobei die aus bindigem Material bestehenden Ringräume gegen die Saugleitung mit einem Vollrohr abgedeckt sind und im Bereich der Filterstrecke, das heißt in Höhe der jeweiligen Kiesbetten, die Saugöffnungen angeordnet sind. Vorzugsweise kann ein im Filterrohr höhenverstellbar angeordneter Liner vorgesehen sein, der vorhandene Filterstrecken wahlweise abdeckt oder freigibt. Zwischen zwei übereinander liegenden Filterstrecken liegt jeweils ein relativ gasdichter Bereich aus bindigem Material, wie zum Beispiel Ton. Die abgeführten Deponiegase, insbesondere das entstehende Methan, können somit durch einen eingestellten Unterdruck und/oder die Stellung des Liners dosiert werden.

Problematisch sind jedoch die durch Einziehung neuer Saugleitungen entstehenden Kosten. Sofern die Deponie geschlossen und bereits eine Oberflächenabdeckung geschaffen bzw. Rekultivierungsmaßnahmen erfolgt sind, ist es zudem technisch aufwendig, aber auch genehmigungsrechtlich nur unter großen Schwierigkeiten möglich, zusätzliche Brunnen bzw. Saugleitungen in den Deponiekörper einzubringen.

Um die Deponiegasgewinnung ohne hohen technischen Aufwand zu verbessern, wird in der WO 2005/110631 ein Verfahren zur Umrüstung von in Deponien angeordneten Gasbrunnen vorgeschlagen, bei dem in das Filterrohr mindestens ein Saugrohr eingezogen wird, über dessen Außenmantel an zwei im Abstand angeordneten Stellen jeweils ein aufblasbarer Schlauch gezogen ist, der nach Absenkung des Saugrohres im Filterrohr so aufgeblasen wird, dass er sich abdichtend an dem Filterrohrinnenmantel anlegt. Hiernach wird über eine Leitung ein aushärtbares Material, vorzugsweise Kunststoffschaum in den zwischen den Schläuchen verbleibenden Ringraum in das Filterrohr unter Druck so eingebracht, dass es sich in dem verbleibenden Ringraum sowie in den höhengleichen um das Filterrohr angeordneten gasdurchlässigen Bereichen ergießt und anschließend zu einer gasdichten Masse aushärtet, wonach der Bereich unterhalb dieser gasdichten Masse nur noch über das Saugrohr absaugbar ist. Der aufblasbare Schlauch wird mit dem Saugrohraußenmantel durch Kleben verbunden.

Der aufblasbare Schlauch oder andere Dichtungen haben sich in konkreten Anwendungsfällen teilweise als problematisch erwiesen. Der zwischen der oberen und unteren Dichtung eingebrachte Kunststoffschaum kann beim Aufschäumen einen sehr hohen Druck aufbauen, der in gedämmten Zustand bis zu 10⁷ Pa erreicht und im Inneren Temperaturen bis zu 90° C enstehen lässt. Durch diese chemischphysikalischen Eigenschaften können bisweilen die Dichtungen teilweise zerstört werden, wonach der Schaum ungewollt in darunter oder oberhalb liegende Bereiche des zu dichtenden Bereiches austritt. Nach Zerstörung einer oder beider Dichtungen nimmt der Schaum beim Aufschäumen den Weg des geringsten Widerstandes, wodurch im Filterrohr eine hohe Schaumsäule entsteht, wohingegen die Abdichtung im Filterrohr im Übrigen mangelhaft bleibt. Die Temperaturerhöhung mit dem von außen auf das neu eingezogene Saugrohr einwirkenden hohen Druck kann zuweilen auch zu einer Verformung bis hin zum Kollabieren des eingezogenen Innenrohres führen.

Darüber hinaus besitzt das beschriebene Verfahren den Nachteil, dass der Brunnenquerschnitt, das heißt der Querschnitt des nutzbaren Brunnenrohres gegenüber dem Urzustand deutlich irreversibel verringert wird. Teilweise im Gasbrunnen eingebaute Sickerwasserpumpen müssen vor der Umrüstung ausgebaut werden und können auch nicht mehr installiert werden. Nachträgliche Änderungen wie zum Beispiel weitere Abdichtungen zu einem späteren Zeitpunkt sind nicht mehr möglich.

Es ist daher Aufgabe der vorliegenden Erfindung, ein Verfahren der eingangs genannten Art anzugeben, mit dem die vorgenannten Nachteile vermieden werden.

Zur Lösung dieser Aufgabe wird das Verfahren nach Anspruch 1 vorgeschlagen, bei dem erfindungsgemäß unterhalb und oberhalb des abzudichtenden Bereiches im Abstand zueinander jeweils ein zunächst fließfähiger Kunststoffschaumpropf in das Filterrohr eingebracht wird, der den gesamten Querschnitt des Filterrohres abdeckt und der geringfügig in vorhandene Filterschlitze und -löcher des Filterrohres eindringt. Dieser Schaumpropf nimmt nach dem Aushärten eine im Filterrohr unverschiebbare ortsfeste Lage ein und dient als obere und untere Begrenzung eines Zwischenraums, in den über eine im oberen Kunststoffschaumpropf eingebettete Zufuhröffnung ein aufschäumbares Kunststoffschaumgemisch eingeführt wird. Beim Aufschäumen dieses Gemisches füllt das Kunststoffschaumgemisch zunächst das Filterrohr über den gesamten Querschnittsraum aus und dringt danach radial nach außen, das heißt über die vorhandenen Schlitze und Löcher des Filterrohres in die Poren der zwischen dem Filterrohr und dem Bohrungsmantel vorhandenen Schüttung aus Filterkies. Durch gezielte Dosierung relativ zu dem zuvor durch Kunststoffpropfen geschaffenen Zwischenraum dehnt sich das Kunststoffschaumgemisch bis zum Bohrungsmantel aus und bildet somit im Filterkies eine im Wesentlichen gasdichte Zone. Abschließend wird auf mechanische Weise, zum Beispiel durch Fräsen, das in das Filterrohr eingebrachte Material wieder entfernt. Das genannte Verfahren hat den Vorteil, dass die Abdichtung des Gasbrunnens in der vorgesehenen Zone über einen definierten Bereich optimal erfolgen kann und der Filterrohrquerschnitt unverändert erhalten bleiben kann.

Weitere vorzugsweise Ausführungen werden in den Unteransprüchen 2 ff. beschrieben.

So wird vorzugsweise zuerst in das Filterrohr ein fester becherförmiger Kunststoffeinsatz, der insbesondere aus leicht fräsbarem Polyurethan (PU) besteht, unterhalb des abzudichtenden Bereiches eingeklemmt, wonach in einem darüber liegenden Bereich der untere zunächst fließfähige Kunststoffschaumpropf in das Filterrohr eingebracht wird. Durch diese Maßnahme wird verhindert, dass das Material des Kunststoffschaumpropfes nach unten abfließt. Über die Masse des eingeführten Materials des Kunststoffschaumprofes kann dessen Höhe exakt gefertigt werden.

Bei der Herstellung des oberen Kunststoffschaumpropfes wird vorzugsweise in entsprechender Weise verfahren, das heißt, dass zunächst auch im Abstand zu dem unteren Kunststoffschaumpropf, nämlich am oberen Rand des abzudichtenden Bereiches, ein fester becherförmiger oberer Kunststoffeinsatz eingeklemmt wird. Damit abschließend in den Zwischenraum noch aufschäumbares Material eingeführt werden kann, wird durch den Boden des Kunststoffeinsatzes ein Rohr oder ein Schlauch mit einer Länge gesteckt, die größer ist als die Schichthöhe des darüber hiernach gefertigten oberen Kunststoffschaumpropfes ist. Der einzuklemmende feste becherförmige Kunststoffeinsatz kann auch mit dem Rohr oder dem Schlauch als einteiliger Körper gefertigt sein. Nach Einklemmen des oberen Kunststoffeinsatzes wird der obere Kunststoffschaumpropf gebildet. Durch die zwei ausgehärteten Kunststoffschaumpropfen entstehen obere und untere ortsfeste "Widerlager", die beim abschließenden Einführen des aufschäumbaren Kunststoffschaumgemisches verhindern, dass sich dieses Gemisch unerwünscht unkontrolliert in vertikaler Richtung jenseits der Widerlager-Grenze ausdehnt. Das Aufschäumen vollzieht sich nach dem Auffüllen des Zwischenraumes ausschließlich in radialer Richtung, das heißt in das Filterkiesbett, wo die vorhandenen Poren zumindest im Wesentlichen komplett geschlossen werden.

Das Rohr zum Zuführen des Kunststoffschaumgemisches hat einen kleinstmöglichen Innendurchmesser, der notwendig ist, um das Kunststoffschaumgemisch einzuführen bzw. einzuspritzen. Der Durchmesser ist jedenfalls deutlich kleiner als der Filterrohrdurchmesser.

Schließlich besteht das Kunststoffschaumgemisch aus zwei Komponenten, nämlich einem Isocyanat und einem Polyol, das zu einem geschlossen porigen festen Polyurethankörper aushärtet.

Ein Ausführungsbeispiel ist in den Zeichnungen dargestellt. Es zeigen
- Fig. 1: eine schematische Querschnittsansicht eines Gasbrunnens vor der Ertüchtigung,
- Fig. 2 bis 7: dieselben Querschnittsansichten des Gasbrunnens im Laufe des erfindungsgemäßen Verfahrens.

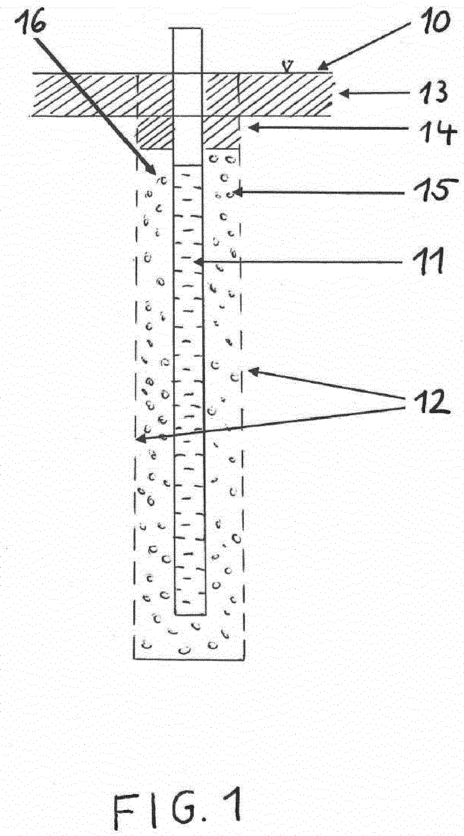

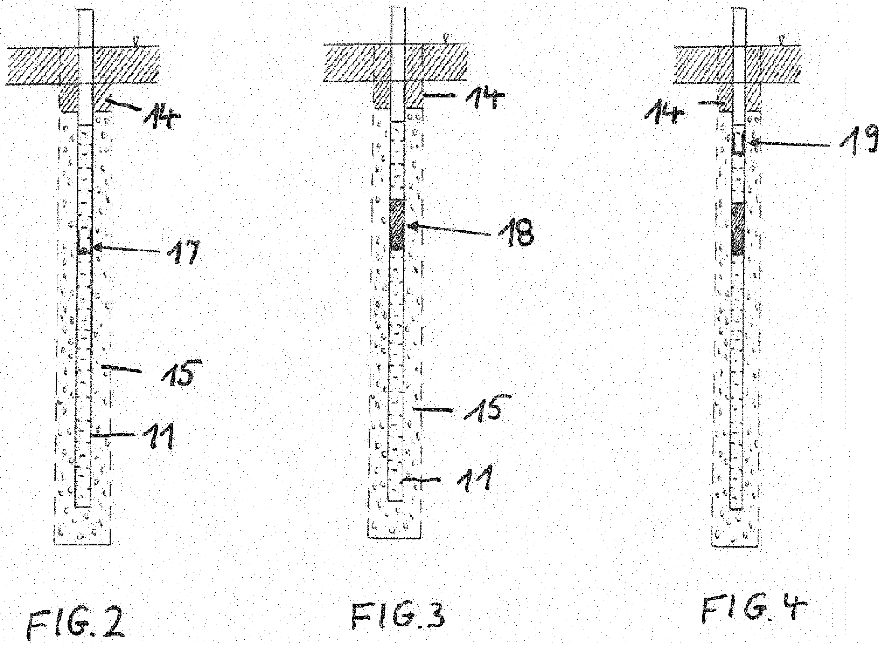

Fig. 1 zeigt eine prinzipielle Querschnittsansicht eines Gasbrunnens mit einem Filterrohr 11, das von der Geländeoberkante 10 bis in tiefe Bereiche über den Deponiegrund ragen kann. Das Filterrohr 11 liegt zentrisch zu einem Brunnenrohr 12 oder einer fest gebohrten Brunnenwanne. Zwischen dem Innenmantel des Brunnenrohreres 12 und dem Filterrohr 11 ist unterhalb einer Oberflächenabdeckung 13 über eine Tiefe von drei bis vier Metern ein weitgehend gasdichtes Material, zum Beispiel Ton 14 verfüllt. In diesem Bereich kann das Rohr 11 auch als Vollrohr ausgebildet sein. Unter der gasdichten Schicht aus Ton 14 ist eine permeable Schüttung, meist Kiesschüttung 15 rings um das Filterrohr 11 angeordnet, so dass über entsprechende Mantelöffnungen (Schlitze oder Löcher) des Filterrohres 11 Gas aus dem Deponiekörper abgesogen werden kann. Der Gasbrunnen weist im oberen Bereich 16 unterhalb der Tonschicht eine Undichtigkeit zur Außenluft auf. Beim Besaugen des Gasbrunnens tritt hierüber Außenluft ein und verdünnt das Deponiegas teilweise bis auf energetisch nicht mehr nutzbare Konzentrationen. Die Undichtigkeit kann nur behoben werden, wenn der gesamte (undichte) Porenraum im Filterkies irreversibel mit gasdichtem Material gefüllt wird. Soll in einer Zone, deren Höhe beispielsweise drei Meter betragen kann, eine Gasbrunnenabdichtung geschaffen werden, wird die folgt verfahren:
Zunächst wird, wie in Fig. 2 dargestellt, ein becherförmiger Kunststoffeinsatz 17 in das Filterrohr 11 eingeklemmt. Dieser becherförmige Einsatz kann aus einem elastischen PU oder einem anderen zerspanbaren Material bestehen. Der Becher weist beispielsweise eine innere Höhe von 100 mm bis 150 mm auf. Dadurch, dass der Becher einen geringfügig größeren Durchmesser als der Innendurchmesser des Filterrohres 11 besitzt, kann er mittels eines Werkzeuges bis auf die vorgesehene Tiefe geschoben werden, wo er festgeklemmt bleibt. Hiernach wird über dem installierten becherförmigen Kunststoffeinsatz 17 aufschäumendes Kunststoffmaterial, vorzugsweise aus einem Zweikomponentengemisch, entsprechend Fig. 3 so eingebracht, dass das Material einen Kunststoffschaumpropf 18 einer Höhe von beispielsweise 500 mm bis 1000 mm bildet. Der eingespritzte Schaum ist bis zum vollständigen Aushärten weich und fließfähig, weshalb er geringfügig in die Filterschlitze bzw. Filterlöcher des Filterrohrs 11 eindringt. Nach dem Aushärten ist der Schaumpropf 18 nicht mehr verschiebbar. In der Praxis konnten Auflasten von 200 kg in einem Filterrohr von 250 mm Durchmesser ohne Verschiebung des Kunststoffschaumpropfes 18 getragen werden.

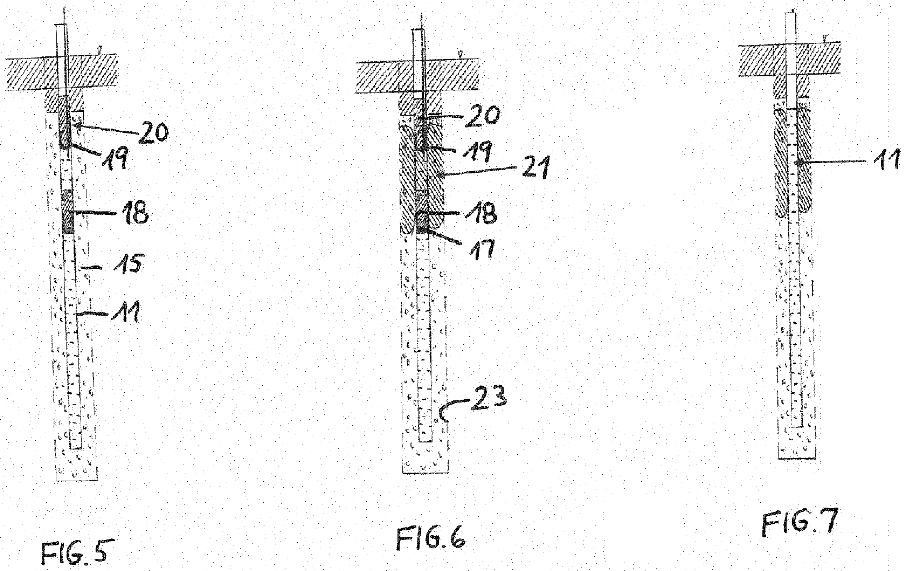

Oberhalb des unteren Schaumpropfes 18, beispielsweise drei Meter darüber, wird ein zweiter Schaumpropf 20 installiert, wobei hierzu zunächst ein Kunststoffeinsatz 19 entsprechend Fig. 4 eingeklemmt wird, bevor der Kunststoffschaumpropf 20 (siehe Fig. 5) eingebracht und ausgehärtet wird. Ein Unterschied ergibt sich insofern als der Kunststoffeinsatz 19 mit einem Rohr oder einem Schlauch verbunden ist, über das oder den später fließfähiges Zweikomponentenkunststoffmaterial in den Zwischenraum 21 eingespritzt werden kann. Vorzugsweise wird das Rohr bzw. ein Schlauch 22, der gegebenenfalls auf ein Rohr aufgesteckt werden kann, bis außerhalb des Brunnenrohres geführt.

Nach Aushärtung des oberen und unteren Kunststoffschaumpropfes 18 und 20 wird ein angemischtes, aber noch nicht ausschäumendes Zweikomponentengemisch, bestehend aus einem Isocyanat und Polyol in den Zwischenraum 21 gespritzt. Dieses Material schäumt im Bereich 21 auf und kann zunächst den Zwischenraum unterhalb des Einsatzes 19 und oberhalb des Kunststoffschaumpropfes 18 ausfüllen, um später radial nach außen in das vorhandene Kiesbett bis zum Brunnenrand 23 zu dringen, wobei der aufschäumende Kunststoff (Polyurethanschaum) das Kiesbett 15 porendicht verschließt (siehe Fig. 6).

Nach dem Aushärten des aufschäumenden Polyurethanschaumes wird zunächst der Füllschlauch 22 sowie das Rohr entfernt, bevor mittels einer Fräse sämtliche Schichten 20, 19 und 18, 17, die im Filterrohr 11 gebildet werden, entsprechend Fig. 7 entfernt werden. Eine Verformung des Filterrohres 11 sowie eine unzureichende Abdichtung des Kiesbettes im Bereich 21 werden wirkungsvoll vermieden.

Das Brunnenrohr weist idealerweise nach dem Entfernen der geschaffenen Zonen im Inneren wieder den gleichen Durchmesser auf wie vor der Behandlung.

Von besonderem Vorteil ist es zudem, dass die Abdichtung hiernach in entsprechender Weise auch in tieferen Bereiche des Brunnens auf dieselbe Art und Weise erfolgen kann, weil im Unterschied zu dem in der WO 2005/110631 A1 beschriebenen Verfahren der Brunnenfilterrohrinnendurchmesser unverändert bleibt. Durch die geschaffene Abdichtung werden unerwünschte Absaugungen in dem abgedichteten Bereich vermieden, was zu einer entsprechend verbesserten Brunnenertüchtigung führt.

## Patentansprüche

1. Verfahren zum Abdichten von einzelnen Bereichen eines in einer Deponie angeordneten Gasbrunnens, die in einer Bohrung ein durchmesserkleineres Filterrohr (11) aufweisen, wobei zwischen dem Filterrohr (11) und dem Bohrungsmantel eine Schüttung aus permeablem Material, insbesondere Filterkies (15) angeordnet ist, die unterhalb der Geländeoberkante (10) zumindest im Wesentlichen gasdicht und in einem darunter liegenden Bereich gasdurchlässig ist,
**dadurch gekennzeichnet, dass**
unterhalb und oberhalb des abzudichtenden Bereiches im Abstand zueinander jeweils ein zunächst fließfähiger Kunststoffschaumpropf (18, 20) in das Filterrohr (11) eingebracht wird, der den gesamten Querschnitt des Filterrohres (11) abdeckt und der geringfügig in vorhandene Filterschlitze und -löcher des Filterrohres (11) eindringt und der nach Aushärten eine im Filterrohr (11) unverschiebbare ortsfeste Lage einnimmt, und dass danach in den Zwischenraum (21) über eine im oberen Kunststoffschaumpropf eingebettete Zufuhröffnung (22) ein aufschäumbares Kunststoffschaumgemisch eingeführt wird, das nach dem Aufschäumen den Querschnitt des Filterrohres (11) sowie die Poren zwischen dem Filterrohr (11) und dem Bohrungsmantel (12) vorhandene Schüttung aus Filterkies (15) bis hin zu dem Bohrungsmantel vollständig und zumindest im Wesentlichen gasdicht ausfüllt, wonach abschließend mechanisch das in das Filterrohr (11) eingebrachte Material (18, 20) wieder entfernt wird.

2. Verfahren nach Anspruch 1, **dadurch gekennzeichnet, dass** zuerst in das Filterrohr ein fester becherförmiger Kunststoffeinsatz (18), der vorzugsweise aus leicht fräsbaren Polyurethan (PU) besteht, unterhalb des abzudichtenden Bereiches eingeklemmt wird, bevor in einem darüber liegenden Bereich der untere zunächst fließfähige Kunststoffschaumpropf in das Filterrohr (11) eingebracht wird.

3. Verfahren nach Anspruch 1 oder 2, **dadurch gekennzeichnet, dass** nach der Einbringung des unteren Kunststoffschaumpropfes (18) im Abstand zu dessen Oberkante, nämlich am oberen Rand des abzudichtenden Bereiches, ein fester becherförmiger oberer Kunststoffeinsatz (19) eingeklemmt wird, durch dessen Boden ein Rohr oder ein Schlauch (22) mit einer Länge gesteckt wird, die größer als die Schichthöhe des darüber hiernach gefertigten oberen Kunststoffschaumpropfes (20) ist, wonach zuletzt durch das Rohr in den Zwischenraum zwischen dem unteren Kunststoffschaumpropf und dem oberen Kunststoffeinsatz das Kunststoffschaumgemisch zur Abdichtung eingeführt wird.

4. Verfahren nach Anspruch 3, **dadurch gekennzeichnet, dass** das Rohr (22) einen kleinstmöglichen Innendurchmesser aufweist, der notwendig ist, um das Kunststoffschaumgemisch einzuführen.

5. Verfahren nach einem der Ansprüche 1 bis 4, **dadurch gekennzeichnet, dass** das Kunststoffschaumgemisch aus 2-Komponenten, nämlich einem Isocyanat und einem Polyol besteht, das zu einem geschlossen porigen festen Körper aushärtet.

## Claims

1. Method for sealing particular zones of a gas well arranged in a landfill, the gas well having in a bore hole a filter tube (11) with a smaller diameter, wherein between the filter tube (11) and the lateral surface of the bore hole a heap of permeable material, in particular of filtering gravel (15) is arranged which is at least essentially gas-tight underneath the ground surface (10) and in an area lying underneath gas-permeable,
**characterized in that,**
underneath and above the area to be sealed in a distance of one another each an initially flowable plastic foam plug (18, 20) is fed into the filter tube (11) covering the whole cross section of the filter tube (11) and penetrating in a small amount in present filter slots and filter holes of the filter tube (11) and occupying a nonrelocatable stationary position in the filter tube (11), and that thereafter a foamable plastic foam mixture is fed into the interspace (21) via a supply opening (22) embedded in the upper plastic foam plug, the said plastic foam mixture occupying completely and at least essentially gas-tight after foaming the whole cross section of the filter tube (11) as well as the pores between the filter tube (11) and the borehole surface (12) in the present heap of filtering gravel (15), whereafter finally the material (18, 20) fed in the filter tube (11) is removed again mechanically.

2. Method according to claim 1, **characterized in that** at first a solid cup-like plastic element (18) preferably made of polyurethane easily to mill is clamped underneath the zone to be sealed before the lower initially flowable plastic foam plug is fed into the filter tube (11).

3. Method according to claim 1 or 2, **characterized in that** after feeding the lower plastic foam plug (18) in a distance to its upper rim, namely at the upper edge of the zone to be sealed, a solid cup-like upper plastic element (19) is clamped, through its bottom a tube or sleeve (22) with a length is put which is greater than the thickness of the upper plastic foam plug (20) being made thereafter, whereafter at least via the tube the plastic foam mixture is fed into the interspace between the lower plastic foam plug and the upper plastic foam plug for sealing.

4. Method according to claim 3, **characterized in that** the tube (22) has a diameter as small as possible to be necessary for feeding the plastic foam mixture.

5. Method according to one of the claims 1 to 4, **characterized in that** the plastic foam mixture consists of 2 components, namely an isocyanate and a polyol that hardens to a closed porous solid body.

## Revendications

1. Procédé destiné à étancher des zones particulières d'un puits à gaz disposé dans une décharge, qui présentent, dans un trou de forage, un tube filtrant (11) à diamètre plus petit, entre ledit tube filtrant (11) et la surface latérale du trou de forage étant disposé un remblai en matière perméable, en particulier du gravier de filtration (15), qui est étanche au gaz, au moins pour l'essentiel, au-dessous de l'arête supérieure de terrain (10) et est perméable au gaz dans une zone située là-dessous,
**caractérisé par le fait que** respectivement un bouchon de mousse de matière synthétique (18, 20) d'abord coulant est introduit, à distance l'un de l'autre, dans ledit tube filtrant (11) au-dessous et au-dessus de la zone à étancher, bouchon qui couvre l'ensemble de la section transversale du tube filtrant (11) et qui pénètre légèrement dans des fentes et trous de filtre existants du tube filtrant (11) et qui, après le durcissement, prend une position fixe non déplaçable à l'intérieur du tube filtrant (11), et que, ci-après, un mélange de mousse de matière synthétique qui peut être moussé est introduit dans l'intervalle (21) via une ouverture d'amenée (22) encastrée dans le bouchon supérieur de mousse de matière synthétique, mélange qui, après le moussage, comble complètement et de manière au moins pour l'essentiel étanche au gaz la section transversale du tube filtrant (11) ainsi que les pores du remblai en gravier de filtration (15) existant entre le tube filtrant (11) et la surface latérale de trou de forage (12), jusqu'à la surface latérale du trou de forage, ce après quoi, pour finir, la matière (18, 20) introduite dans le tube filtrant (11) est à nouveau enlevée de façon mécanique.

2. Procédé selon la revendication 1, **caractérisé par le fait que**, d'abord, un insert en matière plastique (18) solide en forme de gobelet qui, de préférence, est réalisé dans du polyuréthane (PU) qui peut être facilement fraisé, est serré dans le tube filtrant au-dessous de la zone à étancher, avant que le bouchon inferieur de mousse de matière synthétique d'abord coulant soit introduit dans le tube filtrant (11) dans une zone située là-dessus.

3. Procédé selon la revendication 1 ou 2, **caractérisé par le fait que**, après avoir introduit le bouchon de mousse de matière synthétique (18) inferieur, un insert supérieur en matière plastique (19) solide en forme de gobelet est serré à distance de l'arête supérieure de celui-ci, à savoir sur le bord supérieur de la zone à étancher, à travers le fond duquel on fait passer un tuyau ou un tuyau flexible (22) ayant une longueur qui est supérieure à la hauteur de couche du bouchon supérieur de mousse de matière synthétique (20) réalisé ci-après là-dessus, ce après quoi, en dernier lieu, le mélange de mousse de matière synthétique est introduit pour l'étanchement à travers le tuyau dans l'intervalle entre le bouchon inférieur de mousse de matière synthétique et l'insert supérieur en matière synthétique.

4. Procédé selon la revendication 3, **caractérisé par le fait que** le tuyau (22) présente un diamètre intérieur aussi petit que possible qui est nécessaire pour introduire le mélange de mousse de matière synthétique.

5. Procédé selon l'une quelconque des revendications 1 à 4, **caractérisé par le fait que** le mélange de mousse de matière synthétique se compose de deux composants, à savoir d'un isocyanate et d'un polyol, qui durcit pour donner un corps solide à pores fermés.
